# EUROPÄISCHE PATENTSCHRIFT

(11) **EP 1 577 060 B1**
(45) Veröffentlichungstag und Bekanntmachung des Hinweises auf die Patenterteilung: **16.05.2018**
(21) Anmeldenummer: 05006044.1
(22) Anmeldetag: 18.03.2005
(51) Int. Cl.: B23C 5/08, B24D 7/18, B24B 9/14, B23C 3/12

(54) **Ausklinkwerkzeug**
Notching tool
Outil à entailler

(30) Priorität: 19.03.2004 DE 202004004492 U
(43) Veröffentlichungstag der Anmeldung: 21.09.2005
(73) Patentinhaber: Mader, Gert, 87772 Pfaffenhausen (DE)
(72) Erfinder: Mader, Gert, 87772 Pfaffenhausen (DE)
(74) Vertreter: Pfister, Stefan Helmut Ulrich

(56) Entgegenhaltungen:
- DE-U1- 20 218 724
- US-A- 4 041 650
- US-A- 4 171 926
- US-A- 4 841 676

## Beschreibung

Die Erfindung betrifft ein Ausklinkwerkzeug, insbesondere zur Bearbeitung von Kunststoff- oder Aluminiumprofilen, gemäß dem Oberbegriff des Anspruchs 1. Ein solches Ausklinkwerkzeug ist aus DE 202 18 724 U bekannt. Aus der EP 1 422 005 A1 ist ein Verfahren und eine Vorrichtung zur Randbearbeitung einer optischen Linse aus Kunststoff sowie ein Kombinationswerkzeug dafür bekannt. Das Kombinationswerkzeug weist verschiedene Bearbeitungsbereiche auf, mittels derer in unterschiedlichen Arbeitsgängen eine Randbearbeitung, insbesondere von Kunststoff-Brillenlinsen, erfolgen kann. Als Ausklinkwerkzeug im Sinne der vorliegenden Patentanmeldung ist das Kombinationswerkzeug entsprechend der europäischen Patentanmeldung nicht einsetzbar. Die Druckschrift DE 102 55 058 A1 ist die prioritätsbegründende deutsche Patentanmeldung zu der vorher genannten europäischen Patentanmeldung. Inhaltlich sind beide Druckschriften deckungsgleich.

Die Druckschrift DE 35 42 258 zeigt ein Werkzeug für die spanabhebende Bearbeitung, vorzugsweise als Fräs- und Schleifwerkzeug. Das Fräs- bzw. Schleifwerkzeug ist dabei in der Lage in einem Arbeitsgang gleichzeitig zu fräsen und zu schleifen. Das Werkzeug besteht dabei aus einer in Bearbeitungsrichtung vorn angeordneten Schneidplatte sowie einer sich direkt dahinter befindlichen Stützplatte. Bezogen auf den Durchmesser des abzuhebenden Spanes ist die Stützplatte im Durchmesser gegenüber der Schneidkontur der Schneidplatte leicht überstehend, so dass sie der gleichen Kontur der Schneidplatte folgend lediglich das Schleifen übernimmt.

Aus der Druckschrift DE 695 11 198 T2 ist eine kombinierte Vorrichtung zum Randbearbeiten und Polieren und Sicherheitsfasen von Linsen sowie ein entsprechendes Werkzeug dafür und seiner Verwendung beschrieben. Mittels des in dieser Druckschrift vorgestellten Werkzeuges ist es möglich, beispielsweise fasen- oder nutenartige Vertiefungen oder entsprechend keilförmig ausgebildete Fasen, beispielsweise zur Befestigung der Brillengläser in einem Gestell, herzustellen. Allerdings muß dazu entweder das Werkzeug oder das zu bearbeitende Werkstück jeweils neu positioniert werden, um die jeweilige Bearbeitungsaufgabe durchführen zu können. Ausklinkwerkzeuge ähnlicher Art sind aus der DE 202 18 724 U1 bekannt. Hierin wird ein rotatorisch arbeitendes Ausklinkwerkzeug offenbart, dessen Profil erzeugende Oberfläche mit Diamanten besetzt ist, um eine möglichst hohe Fertigungsgüte zu erzielen und die Werkzeugstandzeiten bei gleichzeitiger Verringerung der Bearbeitungszeit zu erhöhen. Jedoch trägt die Bearbeitung vor allem von Kunststoffprofilen durch mit Diamanten besetzte Schleifkörper nicht allen Anforderungen an eine möglichst hohe Fertigungsgüte Rechnung. Es hat sich nämlich gezeigt, dass diese Form der Bearbeitung, insbesondere bei der Fasenbearbeitung, zu nicht befriedigenden Ergebnissen führt, da es zu einem Fasenbrechen durch die Verwendung von Diamantwerkzeugen kommen kann.

Dokument US 3 898 772 A offenbart ein einstückiges Werkzeug zur Schleif- oder Trennbearbeitung mit an einem Grundkörper angeordneten Schneiden. Dieses Werkzeug erlaubt lediglich die Bearbeitung von Werkzeugen, nicht jedoch die Ausbildung unterschiedlicher Konturen.

Es ist daher Aufgabe der Erfindung ein Ausklinkwerkzeug entsprechend des Oberbegriffs des Anspruchs 1 zu schaffen, welches durch entsprechende Gestaltung des Werkzeugkörpers jeden zu bearbeitenden Konturbereich mit einem für diesen Bereich optimierten Bearbeitungsverfahren zu bearbeiten vermag.

Diese Aufgabe wird nach der Erfindung durch die Merkmale des Anspruchs 1 gelöst. Hierdurch werden die Vorteile einer Bearbeitung durch einen Werkzeugkörper mit unbestimmten Schneiden mit denen einer Bearbeitung durch Werkzeugkörper mit bestimmten Schneiden verknüpft, so dass jeder zu bearbeitende Konturbereich einen mit einem optimalen Fertigungsverfahren bearbeitet wird.

Diese spanenden Fertigungsverfahren sind allgemein dem Trennen zuzuordnen. Dabei umfasst das Spanen mit geometrisch unbestimmten Schneiden insbesondere das Schleifen, das Spanen mit geometrisch bestimmter Schneide umfasst hingegen unter anderem das Drehen, Fräsen, Hobeln, Stoßen und Räumen.

Gegenüber allen aus dem Stand der Technik bekannten Lösungen zeichnet sich die Erfindung insbesondere dadurch aus, dass mittels des Ausklinkwerkzeuges Kunststoffprofile insbesondere in einem Arbeitsgang hinsichtlich der Bearbeitung mit bestimmten und unbestimmten Schneiden erfolgen kann. Dabei können unterschiedlichste Konturen, insbesondere an Kunststoffprofilen, erhalten werden, wenn das Ausklinkwerkzeug entsprechend ausgebildet ist. Dazu ist es möglich, das Ausklinkwerkzeug entweder entsprechend der gewünschten Kontur zu gestalten. Es ist allerdings auch möglich, entsprechend einer vorteilhaften Weiterbildung der Erfindung, dieses an unterschiedliche Konturen anpassbar zu gestalten. Damit werden unterschiedlichste Konturenverläufe an Werkstücken in einem einzigen Arbeitsgang hergestellt. Alle aus dem Stand der Technik bekannten Werkzeuge können dies nicht in einem Arbeitsgang. Entweder ist es nicht möglich, unterschiedliche Konturen zu erhalten oder aber es ist notwendig, das Werkzeug bzw. das Werkstück für den jeweiligen Bearbeitungsgang neu einzurichten, um die gewünschte Bearbeitung durchführen zu können. Dies erfordert einen nicht unerheblichen Zeitaufwand. Dieser wird durch die Erfindung jetzt eingespart.

Um beide Arten der spanenden Bearbeitung gut kombinieren zu können, bietet sich an, dass der Werkzeugkörper von mehreren, konzentrisch zueinander angeordneten Grundkörpern gebildet ist, die auf einer angetriebenen Welle angeordnet sind und mit dieser rotieren. Der Werkzeugkörper kombiniert also in diesem Fall die Verfahren Schleifen (geometrisch unbestimmte Schneide) und Fräsen (geometrisch bestimmte Schneide) miteinander. Ferner bietet diese Art des Werkzeugaufbaus Vorteile für eine schnelle Reparatur des Werkzeugkörpers und die Möglichkeit, den Werkzeugkörper der herzustellenden Kontur durch Auswechslung von unterschiedlichen Grundkörpern mit verschieden geformten Bearbeitungsbereichen anzupassen. Zweckmäßiger Weise sind die Grundkörper hierzu lösbar mit der Welle verbunden, sie können aber, sofern dies vorteilhaft erscheint, auch einstückig mit der Welle verbunden sein.

Der erste Bearbeitungsbereich ist erfindungsgemäß von einer mit Diamanten besetzten, dem Werkstück zugewandten Außenfläche des Werkzeugkörpers gebildet. Die Bearbeitung mit Diamanten führt zu einer guten Fertigungsgüte und gewährleistet gleichzeitig hohe Werkzeugstandzeiten und eine zügige Bearbeitung des Werkstücks.

Der zweite Bearbeitungsbereich ist von zumindest einer vorzugsweise aus Hartmetall hergestellten Schneidplatte gebildet, die wenigstens eine geometrisch bestimmten Schneide aufweist. Schneidplatten aus Werkzeug- oder Schnellarbeitsstählen, aus Schneidkeramiken oder polykristallinen Schneidstoffen können in bestimmten Fällen ebenfalls vorteilhaft sein.

Ein weiterer Aspekt der Erfindung ist dadurch angegeben, dass der erste Bearbeitungsbereich und der zweite Bearbeitungsbereich derart ausgebildet sind, dass sie an unterschiedlich gewünschte Konturen eines Werkstückes anpassbar sind, insbesondere derart, dass die Bearbeitung des Werkstückes in einem Arbeitsgang ermöglicht ist. So ist es beispielsweise möglich, das Ausklinkwerkzeug so zu gestalten, dass bestimmte Bereiche verstellbar bzw. veränderbar ausgebildet sind. Dies kann zum einen im Durchmesser, dies kann aber auch in der Höhe geschehen. Beispielsweise können Zwischenstücke vorgesehen sein, die zur Erreichung einer bestimmten Kontur vor der Bearbeitung zugefügt werden. Im weiteren ist auch eine Verstellung der Anstellwinkel der Schneiden vorgesehen, so dass unterschiedlichste Varianten realisierbar sind. Dies vermögen die aus dem Stand der Technik bekannten Lösungen von Kombinationswerkzeugen der Kunststoffbearbeitung nicht zu leisten. Vielmehr besitzen diese gegenüber der jetzt vorgestellten verbesserten Variante der Erfindung feste, nicht verstellbare Schneidbereiche bzw. Schleifbereiche.

Es kann vorgesehen sein, dass zumindest einer der Grundkörper von einer Schneidplatte gebildet ist. In diesem Fall sind die Schneidplatte und einer der Grundkörper einstückig ausgeführt. Die Schneidplatte kann so in besonderes einfacher Weise auf die Welle aufgeschoben werden und als Teil des Werkzeugkörpers den zweiten Bearbeitungsbereich bilden.

Eine alternative Ausgestaltung des erfindungsgemäßen Ausklinkwerkzeugs sieht vor, dass die Schneidplatten mit einem der Grundkörper lösbar oder unlösbar verbunden sind. Die Schneidplatten werden bei einer unlösbaren Verbindung mit einem der Grundkörper vorzugsweise verlötet, verschweißt oder aufgeschrumpft. Sind die Schneidplatten mit einem Grundkörper lösbar verbunden, sind sie in der Regel verschraubt. So kann der Werkzeugkörper für den jeweiligen Anwendungsfall optimiert aufgebaut werden. Eine solche Ausgestaltung hat ferner den Vorteil, dass bei einer Beschädigung einer geometrisch bestimmten Schneide diese durch Austausch der Schneidplatte schnell und einfach ersetzt werden kann. Ferner kann, sofern die Form des zweiten Konturbereichs geändert werden soll, der Werkzeugkörper der neuen Kontur durch Austausch einer Schneidplatte in effizienter Weise angepasst werden.

Eine Weiterbildung der Erfindung zeichnet sich dadurch aus, dass die Schneidplatte eine Wendeschneidplatte ist, die mit einem der Grundkörper lösbar verbunden ist. Die Verwendung von Wendeschneidplatten ist zum Einen preiswert und ermöglicht zum Anderen eine schnelle und einfache Anpassung des Werkzeugkörpers, insbesondere bei Beschädigungen einer geometrisch bestimmten Schneide.

Sofern die Schneidplatte lösbar mit einem der Grundkörper verbunden ist, ist es vorteilhaft, dass die Schneidplatte über eine lösbare Arretierung an einem der Grundkörper befestigt ist und relativ zum Grundkörper verschiebbar, versetzbar oder verdrehbar gelagert ist. So wird eine Einstellbarkeit der einzelnen Schneidplatten und somit der geometrisch bestimmten Schneiden am Grundkörper ermöglicht. Hierdurch wird in besonders einfacher und vorteilhafter Weise erreicht, dass eine Modifizierung des Werkzeugkörpers zwecks einer Änderung des zweiten Konturbereichs lediglich durch Lösen einer Schneidplatte, Verstellen der Schneidplatte relativ zum Grundkörper und wieder Feststellen der Schneidplatte realisiert werden kann. Beispielsweise kann eine Änderung eines durch die Schneidplatte am Werkstück bewirkten Fasenwinkels oder einer Konturtiefe oder -form so realisiert werden, ohne dabei einen Grundkörper von der Welle abnehmen zu müssen. Die Verstellbarkeit kann etwa durch mehrere zueinander versetzte Bohrungen oder durch Langlöcher in der Schneidplatte realisiert werden.

Um eine besonders zügige und günstige Bearbeitung des Werkstücks zu ermöglichen, ist vorgesehen, dass zumindest zwei geometrisch bestimmte Schneiden für zumindest einen Teil des zweiten Bearbeitungsbereichs vorgesehen sind, deren jeweilige bestimmungsgemäße Schnittrichtung entgegensetzt sind. Eine Bearbeitung des Werkstücks mit dem ersten Bearbeitungsbereich ist durch dessen Ausgestaltung mit geometrisch unbestimmten Schneiden problemlos in mehreren Richtungen möglich. Daher ist es wünschenswert, dass auch der zweite Bearbeitungsbereich, beispielsweise bei einer Bearbeitung mit einem rotatorisch arbeitenden Ausklinkwerkzeug, derart ausgestaltet ist, dass mit ihm sowohl eine linksdrehende als auch eine rechtsdrehende Bearbeitung möglich ist. Die geometrisch bestimmten Schneiden mit entgegensetzten bestimmungsgemäßen Schnittrichtungen können dabei zum Beispiel auf einer Schneidplatte angeordnet sein, oder sie sind etwa in Form von entgegensetzt ausgerichteten Wendeschneidplatten lösbar oder unlösbar mit einem der Grundkörper verbunden.

Grundsätzlich sei angeführt, dass eine Schneidplatte selbstverständlich auch mehrteilig ausgeführt sein kann. So ist im Sinne der Erfindung beispielsweise auch ein Träger mit einer an diesem angeordneten und befestigten Wendeschneidplatte, wie es etwa bei Drehmeißeln üblich ist, unter dem Begriff Schneidplatte zusammenzufassen.

Weitere Merkmale und Vorteile der Erfindung ergeben sich aus den Unteransprüchen und aus der nachfolgenden Beschreibung bevorzugter Ausführungsbeispiele anhand der Zeichnung.

In der Zeichnung zeigt:

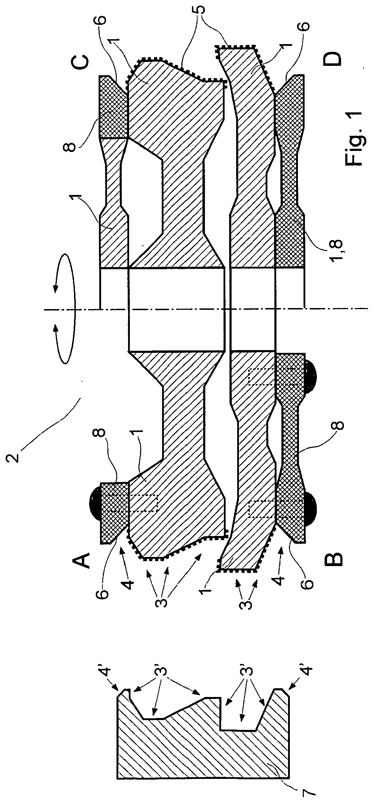

- Fig. 1: ein erfindungsgemäßes Ausklinkwerkzeug mit einem Werkzeugkörper in vier möglichen Varianten A, B, C, D in stark vereinfachter Darstellung.

In Figur 1 ist ein erfindungsgemäßes Ausklinkwerkzeug mit einem Werkzeugkörper 2 und zugehörigem Werkstück 7 in vier Varianten A, B, C, D der Erfindung stark vereinfacht dargestellt. Die gezeigten Varianten A, B, C, D sind hier aus Gründen der Veranschaulichung modellhaft an einem Werkzeugkörper 2 dargestellt. Alle dargestellten Varianten A, B, C, D bewirken die gleiche Bearbeitung des Werkstücks 7.

Hier ist das Ausklinkwerkzeug als rotatorisch arbeitendes Werkzeug ausgeführt. Der Werkzeugkörper 2 ist aus mehreren Grundkörpern 1 aufgebaut, die konzentrisch zueinander auf eine angetriebene Welle aufgeschoben werden und mit ihr rotieren, wobei sie vorzugsweise lösbar mit der Welle verbunden sind. Der Werkzeugkörper 2 weist auf einer dem Werkstück 7 zugewandten Außenfläche einen ersten Bearbeitungsbereich 3 mit geometrisch unbestimmten Schneiden 5 und einen zweiten Bearbeitungsbereich 4 mit geometrisch bestimmten Schneiden 6 auf. Der erste Bearbeitungsbereich 3 klinkt dabei aus dem Werkstück 7 einen ersten Konturbereich 3' aus, der zweite Bearbeitungsbereich klinkt aus dem Werkstück 7 einen zweiten Konturbereich 4' aus. Der zweite Konturbereich 4' ist in dem illustrierten Fall von zwei äußeren Fasen gebildet.

Alle vier dargestellten Varianten A, B, C, D zeigen eine Schneidplatte 8, die jeweils zumindest eine geometrisch bestimmte Schneide 6 aufweist, die den zweiten Bearbeitungsbereich 4 bildet und den zweiten Konturbereich 4' aus dem Werkstück 7 ausklinkt. In der Regel sind aber mehrere geometrisch bestimmte Schneiden 6 über den Umfang des Werkzeugkörpers 2 im zweiten Bearbeitungsbereich 4 verteilt. Um die Funktion des Ausklinkwerkzeugs von der Rotationsrichtung des Werkzeugkörpers 2 unabhängig zu machen, kann in einer vorteilhaften Weiterbildung der Erfindung die Schneidplatte geometrisch bestimmte Schneiden 6 für beide Rotationsrichtungen, also mit entgegengesetzten bestimmungsgemäßen Schnittrichtungen, aufweisen.

Variante A zeigt eine Schneidplatte 8, die mit einem der Grundkörper 1 verbunden ist, wobei der Grundkörper 1, der die Schneidplatte 8 trägt, gleichzeitig auch einen Teil des ersten Bearbeitungsbereich 3 bildet. Die Schneidplatte 8 ist vorzugsweise als Wendeschneidplatte ausgeführt, die lösbar auf dem Grundkörper 1 angebracht ist. Vorzugsweise sind mehrere solcher Schneidplatten 8 in regelmäßigen Abständen über den Umfang des Grundkörpers 1 angeordnet. Die Schneidplatte 8 ist dabei vorzugsweise unmittelbar über ein Schraubenverbindung oder mittelbar über einen Schneidplattenträger auf dem Grundkörper 1 angebracht.

Bei Variante B ist die Schneidplatte 8 von einem einzigen ringförmigen Element gebildet, dass mit einem der Grundkörper 1 verbunden ist und über seinen Umfang zumindest eine geometrisch bestimmte Schneide 6 aufweist, die den zweiten Bearbeitungsbereich 4 bildet. Auch hier ist die Schneidplatte 8 mit einem der Grundkörper 1 verbunden, die an einer dem Werkstück 7 zugewandten Außenfläche zumindest einen Teil des ersten Bearbeitungsbereichs 3 bilden.

Variante C stellt eine Schneidplatte 8 dar, die mit einem Grundkörper 1 verbunden ist, der konzentrisch zu den anderen Grundkörpern 1 auf die Welle aufgeschoben wird, lösbar mit der Welle verbunden ist und mit dieser und den anderen Grundkörpern 1 rotiert. Die Schneidplatte 8 ist bei Variante C vorzugsweise von einem ringförmigen Element gebildet. Die Verbindung zwischen Schneidplatte 8 und Grundkörper 1 wird vorzugsweise als unlösbare Verbindung ausgeführt, was insbesondere Löt- oder Schweißverbindungen beinhaltet, jedoch ist auch ein Aufschrumpfen der ringförmigen Schneidplatte 8 auf den Grundkörper denkbar.

Die letzte dargestellte Variante D zeigt ähnlich der Variante C eine Schneiplatte 8, wobei diese bei Variante D jedoch einstückig mit dem Grundkörper 1 ausgeführt ist. Grundkörper 1 und Schneidplatte 8 bilden also eine Einheit.

## Patentansprüche

1. Ausklinkwerkzeug, insbesondere zur Bearbeitung von Kunststoff- oder Aluminiumprofilen, umfassend einen von mehreren Grundkörpern (1) gebildeten Werkzeugkörper (2), der zumindest einen ersten Bearbeitungsbereich (3) zum Ausklinken eines ersten Konturbereiches (3') und zumindest einen zweiten Bearbeitungsbereich (4) zum Ausklinken eines zweiten Konturbereiches (4') aufweist, wobei der erste Bearbeitungsbereich (3) geometrisch unbestimmte Schneiden (5) aufweist und der Werkzeugkörper (2) von mehreren konzentrisch zueinander angeordneten Grundkörpern (1) gebildet ist, die lösbar auf einer angetriebenen Welle angeordnet sind und mit dieser rotieren, **dadurch gekennzeichnet, dass** zumindest zwei geometrisch bestimmte Schneiden (6) für zumindest einen Teil des zweiten Bearbeitungsbereich (4) vorgesehen sind, deren jeweilige bestimmungsgemäße Schnittrichtung entgegensetzt ist.

2. Ausklinkwerkzeug nach Anspruch 1, **dadurch gekennzeichnet, dass** der erste Bearbeitungsbereich (3) von einer mit Diamanten besetzten, dem Werkstück (7) zugewandten Außenfläche des Werkzeugkörpers (2) gebildet ist.

3. Ausklinkwerkzeug nach einem oder mehreren der vorhergehenden Ansprüche, **dadurch gekennzeichnet, dass** der zweite Bearbeitungsbereich (4) von zumindest einer vorzugsweise aus Hartmetall hergestellten Schneidplatte (8) gebildet ist, die wenigstens eine geometrisch bestimmten Schneide (6) aufweist.

4. Ausklinkwerkzeug nach einem oder mehreren der vorhergehenden Ansprüche, **dadurch gekennzeichnet, dass** der erste Bearbeitungsbereich (3) und der zweite Bearbeitungsbereich (4) derart ausgebildet sind, dass sie an unterschiedliche gewünschte Konturen eines Werkstückes (7) anpassbar sind, insbesondere derart, dass die Bearbeitung des Werkstückes (7) in einem Arbeitsgang ermöglicht ist.

5. Ausklinkwerkzeug nach einem oder mehreren der vorhergehenden Ansprüche, **dadurch gekennzeichnet, dass** zumindest einer der Grundkörper (1) von einer Schneidplatte (8) gebildet ist.

6. Ausklinkwerkzeug nach einem oder mehreren der vorhergehenden Ansprüche, **dadurch gekennzeichnet, dass** die Schneidplatten (8) mit einem der Grundkörper (1) lösbar oder unlösbar verbunden sind.

7. Ausklinkwerkzeug nach einem oder mehreren der vorhergehenden Ansprüche, **dadurch gekennzeichnet, dass** die Schneidplatte (8) eine Wendeschneidplatte ist, die mit einem der Grundkörper (1) lösbar verbunden ist.

8. Ausklinkwerkzeug nach einem oder mehreren der vorhergehenden Ansprüche, **dadurch gekennzeichnet, dass** die Schneidplatte (8) über eine lösbare Arretierung an einem der Grundkörper (1) befestigt ist und relativ zum Grundkörper (1) verschiebbar, versetzbar oder verdrehbar gelagert ist.

## Claims

1. Notching tool, in particular for working plastic or aluminum profiles, comprising a tool body (2) formed by several basic bodies (1), the tool body (2) having at least a first working area (3) for notching a first contour area (3'), and at least a second working area (4) for notching a second contour area (4'), wherein the first working area (3) has geometrically undefined blades (5), and the tool body (2) is formed by several basic bodies (1) arranged concentrically to one another, the basic bodies (1) being arranged releasably on a driven shaft and turning therewith, **characterized in that** at least two geometrically defined blades (6) are provided for at least a part of the second working area (4) the respective intentional cutting direction of which is in opposite direction.

2. Notching tool according to claim one, **characterized in that** the first working area (3) is formed by an outer surface of the tool body (2) that is studded with diamonds and faces the work piece (7).

3. Notching tool according to one or more of the preceding claims, **characterized in that** the second working area (4) is formed by at least one cutting insert (8) preferably produced from hard metal, the cutting insert (8) having at least one geometrically defined blade (6).

4. Notching tool according to one or more of the preceding claims, **characterized in that** the first working area (3) and second working area (4) are designed such that they can be adapted to differently desired contours of a work piece (7), in particular such that working the work piece (7) is possible in one working step.

5. Notching tool according to one or more of the preceding claims, **characterized in that** at least one of the basic bodies (1) is formed by a cutting insert (8).

6. Notching tool according to one or more of the preceding claims, **characterized in that** the cutting inserts (8) are connected with one of the basic bodies (1) releasably or non-releasably.

7. Notching tool according to one or more of the preceding claims, **characterized in that** the cutting insert (8) is a turning cutting insert connected releasably with one of the basic bodies (1).

8. Notching tool according to one or more of the preceding claims, **characterized in that** the cutting insert (8) is attached to a basic body 81) via a releasable locking mechanism and is mounted moving, shifting, or twisting relatively to the basic body (1).

## Revendications

1. Outil à entailler, en particulier destiné à l'usinage de profilés en plastique ou en aluminium, comprenant un corps d'outil (2) formé par plusieurs corps de base (1) et comportant au moins une première zone d'usinage (3) destinée à entailler un premier contour (3') et au moins une deuxième zone d'usinage (4) destinée à entailler un deuxième contour (4') de façon à ce que la première zone d'usinage (3) comporte des lames (5) à géométrie non définie et à ce que le corps d'outil (2) est formé par plusieurs corps de base (1) arrangés de façon concentriques entre eux et amovibles sur un arbre entraîné et en mouvement de rotation avec celui-ci, **caractérisé en ce qu'**au moins deux fils coupants (6) à géométrie déterminée sont prévus pour au moins une partie de la deuxième zone d'usinage (4) dont les directions de coupe sont opposées.

2. Outil à entailler selon la revendication un, **caractérisé en ce que** la première zone d'usinage (3) est formée par une surface diamantée extérieure du corps d'outil (2) et orientée vers la pièce à usiner (7).

3. Outil à entailler selon une ou plusieurs des revendications précédentes, **caractérisé en ce que** la deuxième zone d'usinage (4) est formée au moins par une plaquette de coupe (8) de préférence en carbure et possédant au moins un fil coupant (6) à géométrie déterminée.

4. Outil à entailler selon une ou plusieurs des revendications précédentes, **caractérisé en ce que** la première zone d'usinage (3) et la deuxième zone d'usinage (4) sont configurées de façon à ce qu'elles peuvent être adaptées à différents contours souhaités d'une pièce à usiner (7) et ceci en particulier de façon à ce que l'usinage de la pièce à usiner (7) peut être effectué en une seule opération.

5. Outil à entailler selon une ou plusieurs des revendications précédentes, **caractérisé en ce qu'**au moins un des corps de base (1) est formé par une plaquette de coupe (8).

6. Outil à entailler selon une ou plusieurs des revendications précédentes, **caractérisé en ce que** les plaquettes de coupe (8) sont liées à un des corps de base (1) de façon fixe ou amovible.

7. Outil à entailler selon une ou plusieurs des revendications précédentes, **caractérisé en ce que** la plaquette de coupe (8) est une plaquette de coupe indexable, liée à un des corps de base (1) de façon amovible.

8. Outil à entailler selon une ou plusieurs des revendications précédentes, **caractérisé en ce que** la plaquette de coupe (8) est fixée à un des corps de base (1) via un système de serrage et de desserrage de façon mobile coulissant en continu ou par pas ou de manière rotatif par rapport au corps de base (1).
